# EUROPEAN PATENT APPLICATION

(11) **EP 4 803 059 A1**
(43) Date of publication of application: **09.09.2026**
(21) Application number: 24886308.6
(22) Date of filing: 31.10.2024
(51) Int. Cl.: A61H 3/00, B25J 9/00

(54) **LOWER BODY ASSISTANCE DEVICE**

(30) Priority: 01.11.2023 KR 20230149445; 13.03.2024 KR 20240035318; 14.08.2024 KR 20240109314
(71) Applicant: Angel Robotics Co., Ltd., Seoul 05116 (KR)
(72) Inventor: KIM, Jin Bum, Seoul 06069 (KR)
(74) Representative: advotec.
(86) International application number: PCT/KR2024/016942
(87) International publication number: WO 2025/095636

(57) **Abstract**

The present invention relates to a lower body assistance device, which can adjust the size of a main body unit in which the torso of a wearer is accommodated, has improved usability in daily life since a controller, a battery and the like are disposed at the front of the main body unit, which encompasses the waist and pelvis of a user, rather than being mounted at the rear of the wearer, minimizes wiring exposed to the outside so as to improve the product aesthetics and lower the possibility of product breakdown, and can efficiently transmit auxiliary torque of a joint actuator to the thighs of the wearer.

## Description

### [Technical Field]

The present invention relates to a lower body assistance device. In more detail, the present invention relates to a lower body assistance device, in which the size of a main body unit in which a torso of a wearer is accommodated is adjustable, and a controller, a battery, and the like are disposed at a front of the main body unit, which encompasses a waist and a pelvis of a user, rather than being mounted at a rear of the wearer, so that usability in daily life is improved, and wiring exposed to an outside is minimized to improve aesthetics of a product and lower a possibility of product breakdown, and an auxiliary torque of a joint actuator may be efficiently transmitted to a thigh of the wearer.

### [Background Art]

Recently, a number of patients with aftereffect disorders of brain diseases such as congenital or acquired disabled persons, stroke, and Parkinson's disease is in an increasing trend, and the disabled persons or the patients who have difficulty in independent walking have a risk of muscle strength reduction or cardiopulmonary function weakening.

Therefore, for such disabled persons or patients, walking or rehabilitation training may be performed by constructing a rehabilitation treatment system by introducing a wearable assistance device in a form of an exoskeleton robot in training, medical, or rehabilitation institutions.

Here, the wearable assistance device is mounted on both lower limbs of the user, and driving modes for various walking functions such as a standing up mode, a standing mode, and a sitting mode may be provided, and the wearable assistance device may be configured to adjust a walking time or a walking speed during training.

Meanwhile, for the wearable assistance device, settings of a size, an auxiliary force, a walking cycle, or the like of the assistance device should be performed according to a physical size, a walking ability, or a diagnosis name of the user.

In a case of the lower body assistance device, since it is driven by a rechargeable battery as a power source, weight reduction and miniaturization of the lower body assistance device should be premised in order to increase a driving time. Conventionally, the battery and the controller were provided in a backpack-type main body, so that direct manipulation or battery replacement by the wearer was impossible and usability in daily life was not good due to a bulky main body and the like.

Further, in a case of a conventional assistance device in the form of an exoskeleton robot, products for each size are often subdivided according to the physical size of the user, which causes an increase in cost, and there is a problem that usability of one assistance device is also degraded.

In order to solve such a problem, in a case of some conventional products, a size adjustment function for adjusting a width and a depth of an exoskeleton according to a width or a thickness of the torso of the user is provided in some cases, but the width and the depth of the exoskeleton are separately adjusted, or a configuration for separately adjusting the width and the depth of the exoskeleton is complex and there was a problem that a weight greatly increases.

Also, in a case of a robot in a form of an exoskeleton, since movements of the user and the like should be sensed in real time, various sensors are mounted at various positions of the exoskeleton and are mounted on body organs where movement occurs to sense movement information, but there is a problem that wiring becomes complicated, thereby hindering aesthetics of an appearance and increasing a possibility of breakdown such as disconnection.

### [Disclosure]

### [Technical Problem]

The present invention has as a problem to be solved providing a lower body assistance device, in which the size of a main body unit in which a torso of a wearer is accommodated is adjustable, and a controller, a battery, and the like are disposed at a front of the main body unit, which encompasses a waist and a pelvis of a user, rather than being mounted at a rear of the wearer, so that usability in daily life is improved, and wiring exposed to an outside is minimized to improve aesthetics of a product and lower a possibility of product breakdown, and an auxiliary torque of a joint actuator may be efficiently transmitted to a thigh of the wearer.

### [Technical Solution]

To solve the aforementioned problem, the present invention is directed to provide a lower body assistance device, comprising: a main body unit comprising a rear portion encompassing a rear waist area of a wearer and a pair of side portions extending to encompass hip joint areas of the wearer, respectively, wherein a front thereof is opened, and a metal frame and a housing encompassing the metal frame are provided therein; at least one mount plate rotatably mounted at the front of the main body unit; a thigh frame rotatably connected to both side portions of the main body unit and disposed along a thigh of the wearer; a thigh wearing unit mounted on the thigh frame and provided to encompass the thigh of the wearer; a joint actuator mounted on the side portion of the main body unit to rotate the thigh frame for assisting a hip joint movement of the wearer; a controller mounted on the mount plate for controlling the joint actuator; and a battery detachably mounted on the controller and supplying power to the joint actuator.

In addition, an extension portion for hinge-coupling the mount plate may be provided at a front end of the housing of the main body unit.

Further, a long hole for mounting a belt may be formed in the mount plate.

In this case, the controller may be configured in an 'L' shape in which a vertical portion and a horizontal portion are connected in cross-section, and the battery may be detachably mounted on the horizontal portion.

Further, an input portion for inputting a control signal may be provided on a front surface of the horizontal portion of the controller.

Here, a remaining amount index of the battery mounted on the horizontal portion may be provided on an upper surface of the vertical portion of the controller.

In addition, the thigh wearing unit may be mounted to be slidable in an up-and-down direction within a predetermined range with respect to the thigh frame.

Here, the thigh frame may be configured in a shape connecting the side portion of the main body unit of the wearer and a front area or a side area of a thigh of the wearer.

In addition, an upper end of the thigh frame may be connected to and driven by an output member fastened to the joint actuator and rotationally driven,

And a lower end of the thigh frame may be connected to the thigh wearing unit to transmit a driving force of the joint actuator to the thigh wearing unit, wherein the upper end of the thigh frame may be hinge-coupled to the output member such that adduction and abduction are allowed.

In addition, the main body unit may comprise a bent portion slantingly connecting between the rear portion and the pair of side portions, and at the bent portion, the pair of side portions may be slid with respect to the rear portion, so that a width and a depth of the main body unit is adjustable in size.

In this case, the metal frame constituting the main body unit may be provided with a rear frame disposed inside the rear portion and bent at the bent portion, and a side frame at least partially overlapped with the rear frame at the bent portion and bent in a hip joint side direction, and the joint actuator may be mounted on the side frame.

Further, the rear frame may be fastened to a rear housing, and the side frame may be fastened to a side housing, so that the pair of side portions of the main body unit may be withdrawn or inserted with respect to the rear portion.

Here, an elastic member for providing an elastic force in a direction of restoring a withdrawn state of the side portion may be connected to the side frame of the side portion.

In addition, the elastic member may be a coil spring connecting the side frames of both side portions.

Here, the joint actuator may be configured to comprise a driving part comprising a driving motor, a reduction part connected to an output shaft of the driving motor of the driving part and to which an output member connected to the thigh frame is fastened, and a circuit part configured to comprise a plurality of stacked PCBs comprising a motor driver for controlling the driving motor and at least one sensor.

In addition, the circuit part may be provided at one side of the driving part, and the reduction part may be configured by a plurality of gears connected in a single layer and may be provided at a lower part of the driving part.

### [Advantageous Effects]

According to the lower body assistance device according to the present invention, by configuring a width and a depth of a space in which a torso is accommodated of a main body unit that constitutes the lower body assistance device and in which the torso of a wearer is accommodated to be adjusted only by wearing without a separate manipulation, user convenience and usability of adjusting the size may be improved, and a cost of a product may be lowered.

Also, according to the lower body assistance device according to the present invention, a front of the main body unit is opened, a mount plate is provided at the front of the main body unit, and the wearer directly controls the lower body assistance device and replaces a rechargeable battery and the like so as to mount a controller and the battery on the mount plate, so that usability in daily life may be maximized.

Also, according to the lower body assistance device according to the present invention, by providing sensors within a circuit part in which a motor driver and the like of a joint actuator for hip joint assistance are provided, wiring connection is minimized to improve aesthetics of an appearance, and a possibility of breakdown such as disconnection may be minimized.

Also, according to the lower body assistance device according to the present invention, a thigh frame connecting the joint actuator and a thigh wearing unit connects a side portion of the main body unit and a front area of a thigh of the wearer, so that a distortion and the like of the thigh frame during an operation of the lower body assistance device are minimized and a transmitted auxiliary force or auxiliary torque may be efficiently transmitted.

### [Description of Drawings]

FIG. 1 illustrates a front view of a state in which a lower body assistance device according to the present invention for hip joint assistance is worn, and FIG. 2 illustrates a rear view of a state in which the lower body assistance device illustrated in FIG. 1 is worn.
FIG. 3 illustrates a partially exploded perspective view of the lower body assistance device illustrated in FIGS. 1 and 2.
FIG. 4 illustrates an outer direction perspective view and an exploded perspective view of a joint actuator constituting the lower body assistance device according to the present invention.
FIG. 5 illustrates an inner direction perspective view of a driving motor constituting the lower body assistance device according to the present invention and a perspective view of a state in which a housing of a reduction part is separated.
FIG. 6 illustrates an exploded perspective view of a main body unit of the lower body assistance device according to the present invention.
FIG. 7 illustrates an operating state of a metal frame for adjusting the size of the main body unit of the lower body assistance device according to the present invention.
FIG. 8 illustrates a rear view of a state before adjusting the size and after adjusting the size of the main body unit of the lower body assistance device according to the present invention.
FIG. 9 illustrates a rear view of a state before adjusting the size and after adjusting the size of the main body unit of the lower body assistance device according to the present invention.
FIG. 10 illustrates a front perspective view of a wearer wearing the lower body assistance device according to the present invention according to another embodiment.

### [Mode for Disclosure]

Hereinafter, exemplary embodiments of the present invention will be described in detail with reference to the accompanying drawings. However, the present invention is not limited to the exemplary embodiments to be described below and may be specified as other aspects. On the contrary, the embodiments introduced herein are provided to make the disclosed content thorough and complete, and sufficiently transfer the technical teachings of the present invention to those skilled in the art. Like reference numerals indicate like constituent elements throughout the specification.

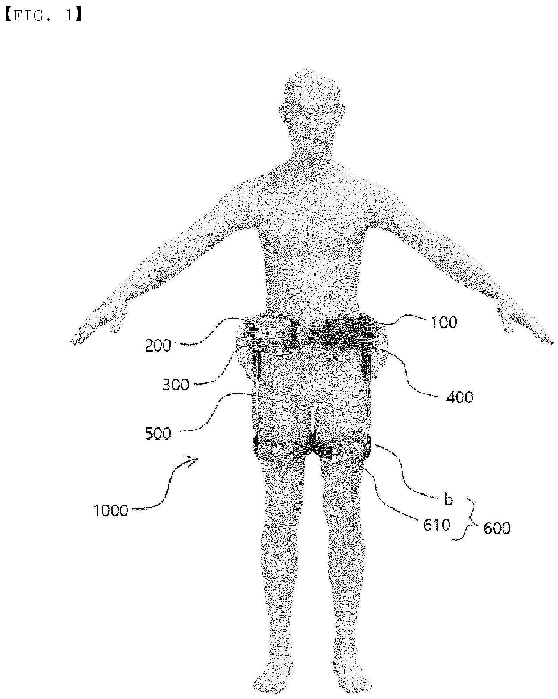

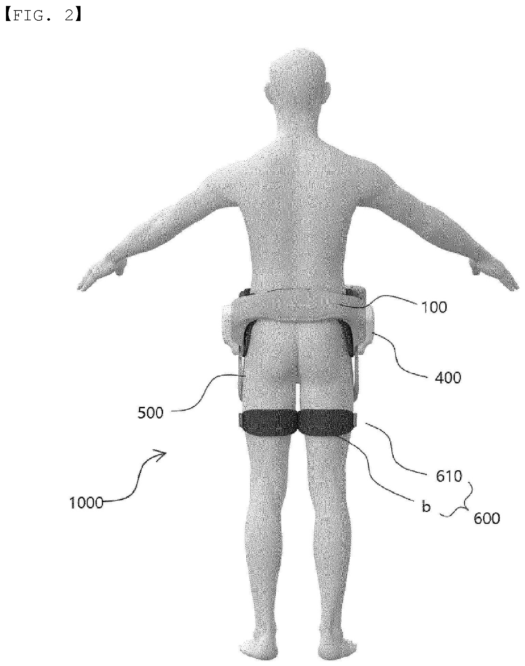

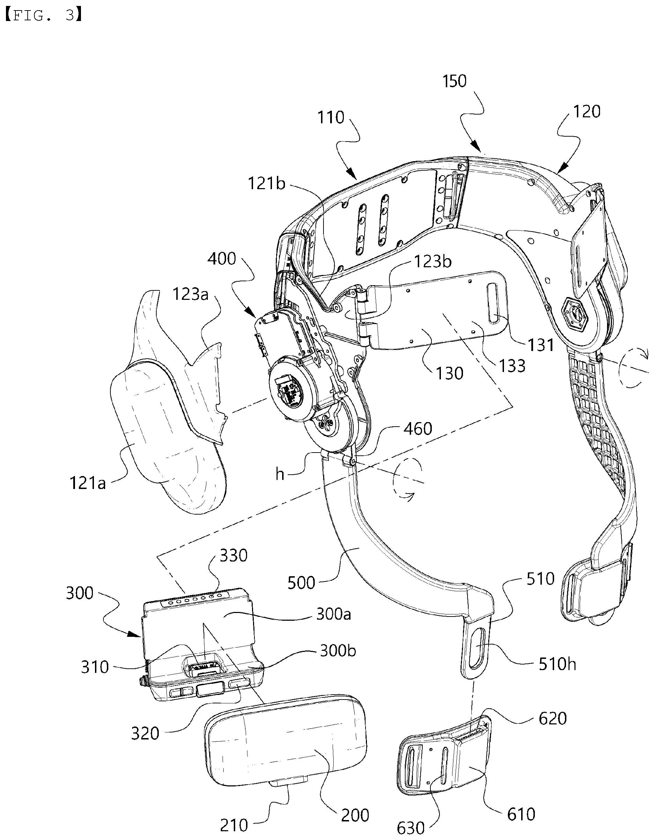

FIGS. 1 to 3 illustrate one embodiment of a lower body assistance device 1000 according to the present invention. Specifically, FIG. 1 illustrates a front view of a state in which a wearer wears the lower body assistance device 1000 for hip joint assistance, FIG. 2 illustrates a rear view of a state in which the lower body assistance device 1000 illustrated in FIG. 1 is worn, and FIG. 3 illustrates a partially exploded perspective view of the lower body assistance device 1000 illustrated in FIG. 1.

In a case of a conventional assistance system in a form of an exoskeleton robot, a structure in which a main body provided with a battery 200, a controller 300, and the like is disposed on a back plate of the wearer, and an exoskeleton is connected from the main body to a lower limb side of the wearer was used, but performing daily life was difficult in a state of wearing the exoskeleton robot.

However, the lower body assistance device 1000 illustrated in FIGS. 1 to 3 is mounted by being miniaturized in a waist area while a backpack-type main body and the like are omitted at a rear of an upper body of the wearer, so that usability in daily life of the wearer is maximized.

Specifically, the lower body assistance device according to the present invention may be configured to include a main body unit 100 including a rear portion 110 encompassing a rear waist area of the wearer and a pair of side portions 120 extending to encompass hip joint areas of the wearer, respectively, wherein a front thereof is opened, and a metal frame and a housing encompassing the metal frame are provided therein; at least one mount plate 130 rotatably mounted at the front of the main body unit 100; a thigh frame 500 rotatably connected to both side portions 120 of the main body unit 100 and disposed along a thigh of the wearer; a thigh wearing unit 600 mounted on the thigh frame 500 and provided to encompass the thigh of the wearer; a joint actuator 400 mounted on the side portion 120 of the main body unit 100 to rotate the thigh frame 500 for assisting a hip joint movement of the wearer; a controller 300 mounted on the mount plate 130 for controlling the joint actuator 400; and a battery 200 detachably mounted on the controller 300 and supplying power to the joint actuator 400.

For the main body unit 100, the front is opened to enable wearing, the rear portion 110 is disposed across the rear waist of the wearer, and both ends of the rear portion 110 may be connected to the pair of side portions 120 disposed in hip joint side areas via a bent portion 150 provided in a diagonal direction.

For the main body unit 100, the metal frame is provided therein while an outside is composed of a resin material housing, so that a refined appearance may be provided while securing sufficient rigidity. A detailed description of the metal frame, a housing structure, and the like constituting the main body unit 100 will be deferred.

At a front end of the housing of the main body unit 100, specifically a housing 121 of the side portion 120, the mount plate 130 which is configured separately from the housing of the main body unit 100 but connected to the housing may be mounted.

The mount plate 130 may provide wearing convenience by opening the front of the main body unit 100 and simultaneously provide a mounting place for the controller 300, the battery 200, and the like.

FIG. 3 illustrates an embodiment in which extension portions 123a, 123b for hinge-coupling the mount plate 130 are provided at front ends of housings 121a, 121b of the side portion 120 of the main body unit 100 so that the mount plate 130 and the extension portions 123a and 123b of the front ends of the housings of the main body unit 100 are connected in a hinge-coupled manner, but a connection method of the mount plate 130 and the housing of the main body unit 100 may be variously changed.

In the embodiment illustrated in FIG. 3, two of the mount plate 130 are illustrated as being respectively fastened to the front ends of the main body unit 100, but only one mount plate 130 may be provided.

In the mount plate 130, a fastening hole for fastening the controller 300 and the like or a long hole for connection of a belt member and the like may be formed.

The controller 300 mounted on the mount plate 130 is configured in an 'L' shape in which a vertical portion 300a and a horizontal portion 300b are connected in cross-section, and may be configured in a structure in which the battery 200 is detachably mounted on the horizontal portion 300b. In a case of the lower body assistance device according to the present invention, since the battery 200 is detachably mounted from the controller 300 on the mount plate 130 connected to the front of the main body unit 100, the wearer has a structure in which replacement of the battery 200 is possible upon discharge of the battery 200 without help from a third party.

The controller 300 is configured in an 'L' shape in cross-section so that the battery 200 is mounted on the horizontal portion 300b, and the vertical portion 300a may provide a mounting place to the mount plate 130.

Since the controller 300 includes the horizontal portion and includes terminal portions 310 and 210 at an upper part of the horizontal portion 300b and a lower part of the battery 200, easy connection is possible in a process in which the battery 200 is docked, and a function of reducing a possibility of separation or fall of the battery 200 upon an external impact may be performed.

Further, in the controller 300, an input portion 320 for inputting a control signal is provided on a front surface of the horizontal portion 300b, so that the wearer can input various control signals or power on/off signals by himself/herself without help from a third party.

Also, a remaining amount index 330 of the battery 200 mounted on the horizontal portion 300b is provided on an upper surface of the vertical portion 300a of the controller 300, so that the user can easily check a remaining amount of the battery 200.

Further, unlike the embodiment illustrated in FIG. 3, since two of the mount plate 130 are provided, a method of mounting the battery 200 and the controller 300 on each mount plate 130 and installing a wiring cable and the like along the main body unit 100 is also possible.

On the side portion 120 of the main body unit 100, the joint actuator 400 for assisting the hip joint movement of the wearer by rotating the thigh frame 500 to be described later may be mounted. The joint actuator 400 may be provided with a reduction gear integrated driving motor and a motor driver configured in a form of a printed circuit board (PCB) for controlling the driving motor, and various sensors, for example, an encoder or an inertial sensor and the like may be integrally provided on the motor driver configured in the form of the PCB. A detailed description of the joint actuator will be deferred.

An output member 460 is mounted on an output shaft or an output end of the joint actuator to be connected to the thigh frame 500.

As illustrated in FIG. 3, the output member 460 mounted on the joint actuator 400 is provided, and the output member 460 is coupled to the thigh frame 500 by a hinge h to have a structure allowing adduction or abduction of a thigh output member.

An upper end of the thigh frame 500 may be connected to the output member of the joint actuator, and a lower end may be connected to the thigh wearing unit 600.

As illustrated in FIG. 3, the upper end of the thigh frame 500 is connected to the output member 460 of the joint actuator 400, and the lower end of the thigh frame 500 is bent toward a front of the thigh of the wearer to be connected to a mount bracket 610 of the thigh wearing unit 600.

When the lower end of the thigh frame 500 is bent toward the front of the thigh of the wearer and disposed along the thigh of the wearer to be connected to the thigh wearing unit, auxiliary force transmission efficiency may be maximized compared to a case otherwise. That is, a lower end 510 of the thigh frame 500 is configured in a manner of being bent in a front direction of the thigh and fastened to the mount bracket 610 of the thigh wearing unit 600, so that a driving force of the joint actuator is effectively transmitted to the thigh, and distortion and the like of the thigh frame 500 upon force transmission may be minimized.

The mount bracket 610 is disposed at the front of the thigh of the wearer, and a belt member b and the like are provided so as to be connected to encompass and fix the thigh of the wearer.

Also, the lower end of the thigh frame 500 is slidably mounted with the mount bracket 610 to compensate to some extent for a deviation of a thigh length according to the wearer or a change in the length of the thigh according to a flexion or extension operation.

In order to slidably connect the lower end of the thigh frame 500 and the mount bracket 610, in the embodiment illustrated in FIG. 3, a long hole 510h is formed at the lower end of the thigh frame 500, and a slot into which the lower end of the thigh frame 500 is inserted and a locking portion (not illustrated) accommodated in the long hole formed at the lower end of the thigh frame 500 therein may be provided in the mount bracket 610.

Therefore, the wearer may improve a wearing sensation or an auxiliary force transmission effect by adjusting a position of the thigh wearing unit 600 according to a shape and a length of the thigh, or may absorb a change in distance between the hip joint actuator and the thigh wearing unit according to the movement of the hip joint.

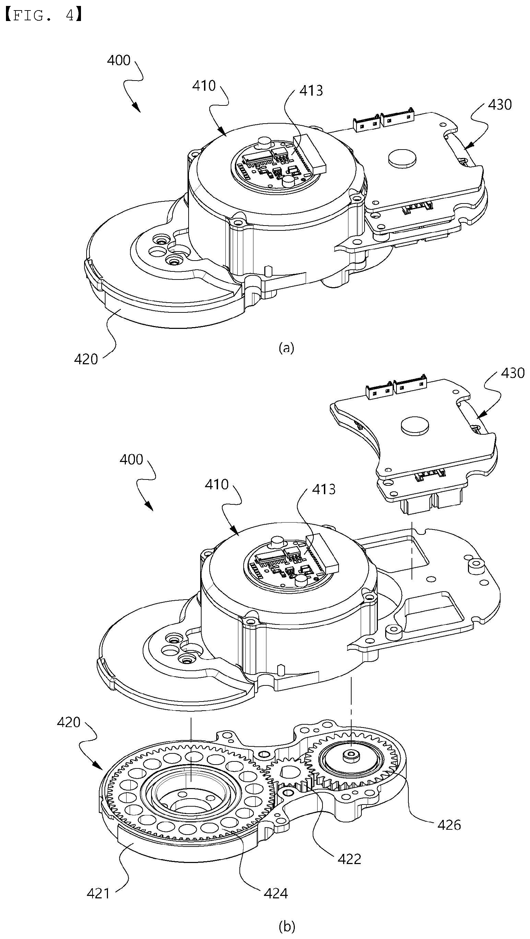

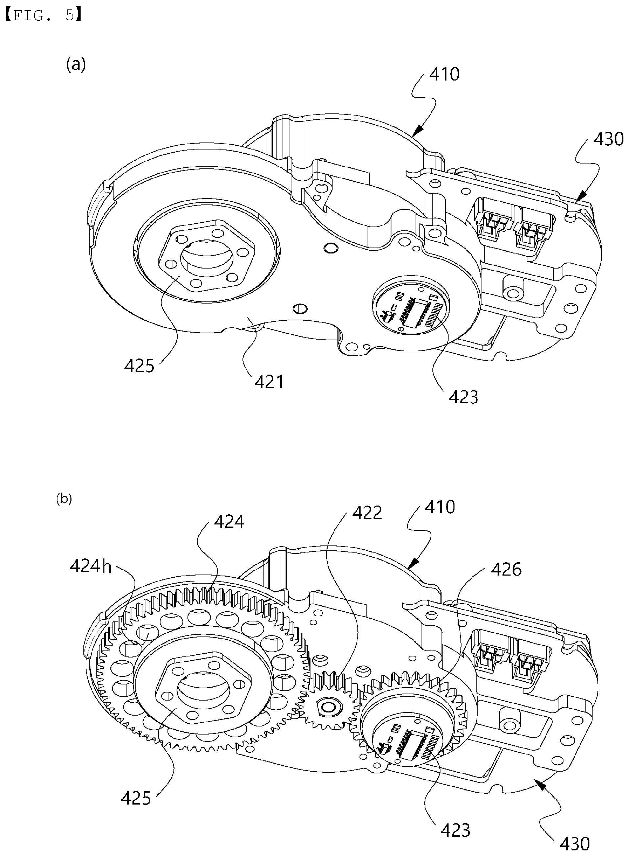

FIG. 4 illustrates an outer direction perspective view and an exploded perspective view of the joint actuator 400 constituting the lower body assistance device 1000 according to the present invention, and FIG. 5 illustrates an inner direction perspective view of a driving motor constituting the lower body assistance device 1000 according to the present invention and a perspective view of a state in which a housing of a reduction part 420 is separated.

The lower body assistance device 1000 according to the present invention includes a pair of joint actuators 400 for hip joint assistance.

The joint actuator 400 illustrated in FIGS. 4 and 5 may be configured by largely including a driving part 410, the reduction part 420, a circuit part 430, and the like.

The driving part 410 may be configured to include the driving motor, a motor encoder 413, and the like, the reduction part 420 may be provided with a plurality of gears, an output end encoder 423, and the like, and the circuit part 430 may be configured in a form of a motor driver including at least one or more PCBs and various control circuits or sensors provided on the boards. As an example of a sensor mounted on the circuit part 430, an IMU sensor and the like may be included.

The driving motor constituting the driving part 410 may be a reduction gear integrated driving motor in a form provided with its own reduction gear and the like, and the motor encoder 413 may be mounted on an output shaft of the driving motor.

The reduction part 420 includes a motor gear 422 connected to the driving motor output shaft of the driving part 410, an output gear 424 driven by the motor gear 422 and having at least one perforation hole 424h for weight reduction and an output end 425 to which the output member 460 (refer to FIG. 3) is fastened, and an auxiliary gear 426 connected to the motor gear 422 and for installation of the output encoder 423, which are connected on a single layer to perform reduction and torque amplification.

By configuring the reduction part 420 as a single layer, the reduction part 420 may be slimmed, and slimming of the reduction part 420 may contribute to miniaturization of the joint actuator.

The output encoder 423 may be mounted on the output gear 424, but since interference with installation of the output member fastened to the output end 425 or various wiring and the like may occur, the auxiliary gear 426 connected together to the motor gear is mounted and the output encoder 423 is mounted on the auxiliary gear 426 to measure a rotation angle of the output member, that is, a rotation angle of the hip joint and the like.

An IMU sensor (not illustrated) mounted on the circuit part 430, the output encoder 423, and information measured by the output encoder 423 are transmitted to the controller and may be used as control variables of the hip joint actuator of the controller 300.

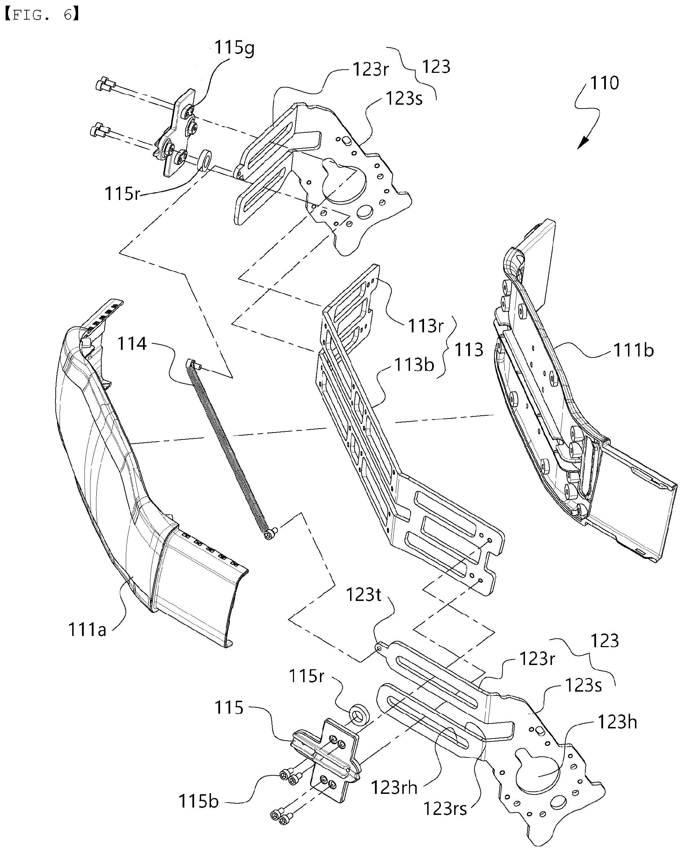

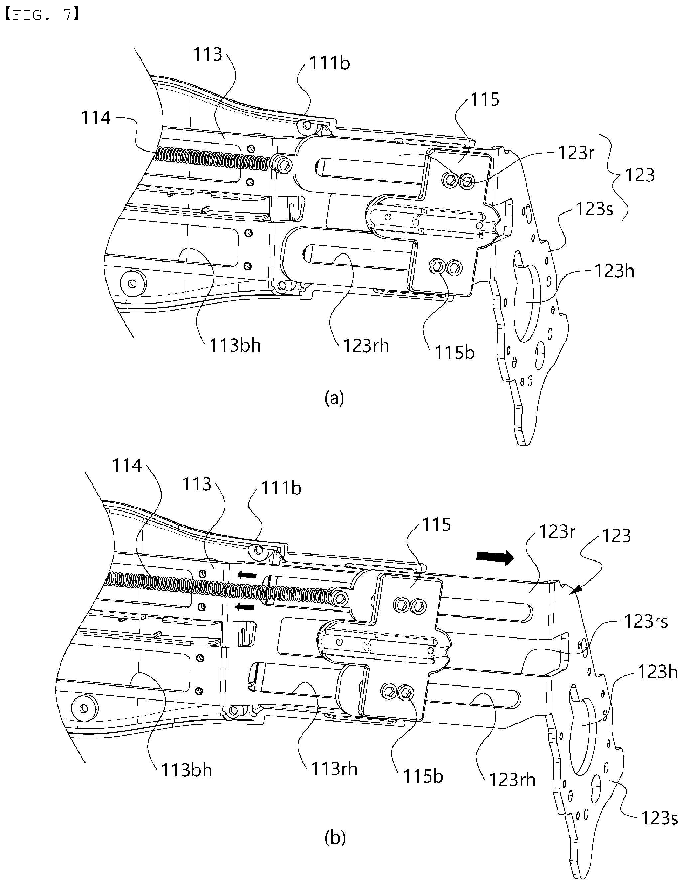

FIG. 6 illustrates an exploded perspective view of the main body unit 100 of the lower body assistance device 1000 according to the present invention, and FIG. 7 illustrates an operating state of the metal frame for adjusting the size of the main body unit 100 of the lower body assistance device 1000 according to the present invention.

The lower body assistance device 1000 according to the present invention has a structure in which a size of the main body unit 100 is changeable so as to correspond to various physical sizes.

The main body unit 100 is partitioned to include the rear portion 110 encompassing the rear waist area, the pair of side portions 120 disposed to encompass both hip joint areas, respectively, and the bent portion 150 slantingly connecting between the rear portion 110 and the pair of side portions 120, and may be configured to include the metal frame and a housing encompassing the metal frame therein.

The metal frame constituting the main body unit 100 may be configured to include a rear frame 113 for supporting the rear waist and a side frame 123 constituting the bent portion 150 by being overlapped at both side ends of the rear frame 113.

The rear frame 113 and the pair of side frames 123 are partially overlapped at the bent portion 150 slantingly connecting the rear portion 110 and the side portion 120 so that the side frame 123 is fastened in a structure slidable with respect to the rear frame 113, and at the bent portion 150, the pair of side portions 120 are slid with respect to the rear portion 110, which has a characteristic that a width and a depth of the main body unit 100 is adjustable in size.

Basically, the rear frame 113 of the main body unit 100 is provided for rigidity reinforcement of the main body unit 100, and the side frame 123 may be provided for mounting of the joint actuator 400 and the like.

Among the metal frame, the rear frame 113 may be configured to include a housing fastening portion 113b fastened on rear housings 111a and 111b constituting the rear portion 110 and a bent portion 113r bent at a predetermined angle at both ends of the housing fastening portion 113b.

Also, each side frame 123 is also fastened to side housings 121a and 121b as described with reference to FIG. 3, and may include an actuator mounting portion 123s mounted in the hip joint area of the wearer and a bent portion 123r bent at the actuator mounting portion 123s and overlapped and mounted on the bent portion 113r of the rear frame 113.

5 The rear frame 113 and the side frame 123 have a structure in which the bent portions 113r, 123r are mutually overlapped and slidable, respectively.

A reason for having a mutual overlapping sliding structure at the bent portions 113r and 123r of the rear frame 113 and the side frame 123 is for adjusting the size of the main body unit 100.

Therefore, with respect to the rear frame 113 of the main body unit 100, the side frames 123 on both sides are respectively configured to be slidable at the bent portions 113r and 123r, so that the size of the main body unit 100 is adjustable.

To this end, the rear frame 113 of the main body unit 100 is fastened to the rear housings 111a and 111b of the main body unit 100, and a bracket member 115 for mounting the bent portion 123r of the side frame 123 to the bent portion 113r of the rear frame 113 so as to be constrained but slidable may be mounted.

As illustrated in FIG. 6, the bracket member 115 may be provided with a guide protrusion 115g and a guide roller 115r disposed on a guide hole 123rh formed at the bent portion 123r of the side frame 123 or an inner peripheral surface 123rs of a branched structure.

The guide protrusion 115g and the guide roller 115r guide a process in which the bent portion 123r of the side frame 123 slides with respect to the bent portion 113r of the rear frame 113 and may prevent friction or distortion and the like.

The bent portion 123r of the side frame 123 is configured in a structure branched into two, and has a structure in which the guide protrusion 115g is guided in the guide hole 123rh at each branch portion and the guide roller is disposed on the inner peripheral surface 123rs between the branch portions, but the structure may be variously changed.

Also, the bent portions 123r of the side frame 123 are connected by an elastic member 114, so that an elastic force may be provided in a direction of mutually pulling. The elastic member 114 may be composed of a coil spring or the like. A connection hole 123t and the like for connection of the elastic member 114 may be provided at the bent portion 123r of the side frame 123.

In the embodiment illustrated in FIGS. 6 and 7, the elastic member 114 may be provided to mutually connect the pair of side frames 123, but may be provided to include two elastic members so that each side frame 123 is independently connected to the rear frame 113 and the like.

Further, a mounting opening 123h for mounting the joint actuator 400 and a plurality of fastening holes for fastening the side housings 121a and 121b and the side frame 123 may be provided at the actuator mounting portion 123s of the side frame 123.

Therefore, the main body unit 100 is configured to be mutually slidable in a state in which the rear frame 113 and the side frame 123 are fastened to each rear housing or side housing, so that the size is adjustable corresponding to the physical size of the wearer, and for adjusting the size, a separate size fixing means and the like are not required by the elastic member.

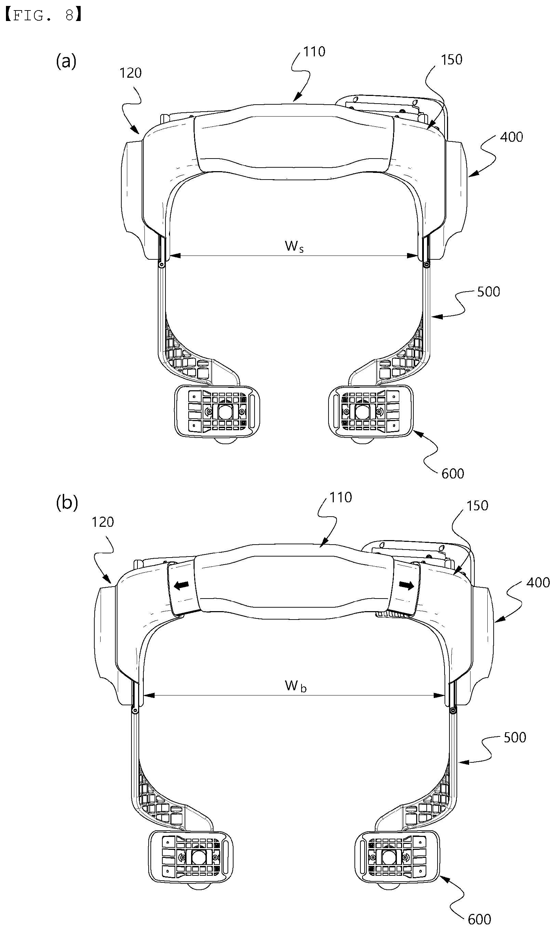

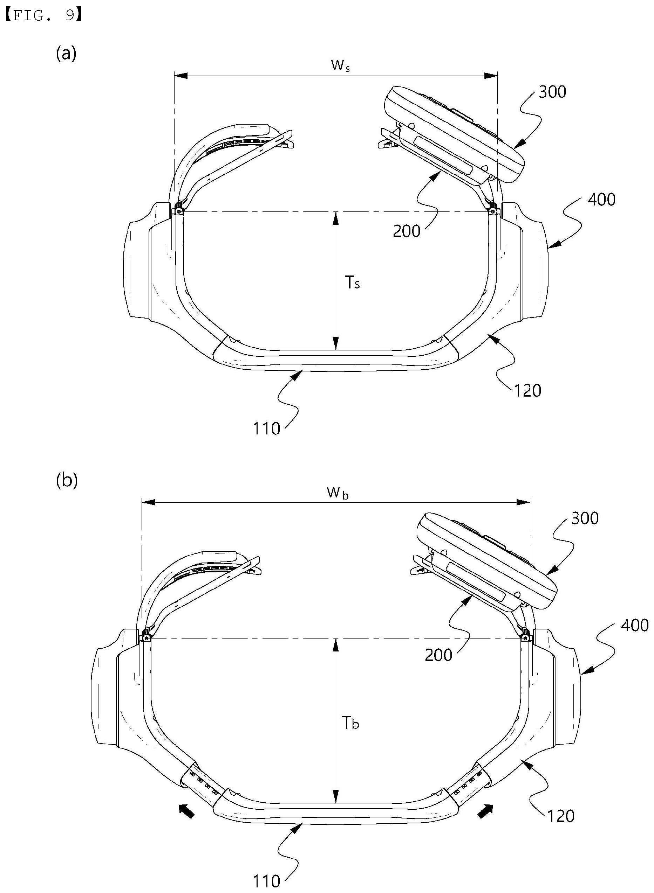

FIG. 8 illustrates a rear view of a state before adjusting the size and after adjusting the size of the main body unit 100 of the lower body assistance device 1000 according to the present invention, and FIG. 9 illustrates a rear view of a state before adjusting the size and after adjusting the size of the main body unit 100 of the lower body assistance device 1000 according to the present invention.

States illustrated in FIG. 8(a) and FIG. 9(a) illustrate a state in which the size of the main body unit 100 is not adjusted, and states illustrated in FIG. 8(b) and FIG. 9(b) illustrate a state in which the size of the main body unit 100 is adjusted.

In the main body unit 100 according to the present invention, the bent portion 150 is provided at a boundary between the rear portion 110 and the side portion 120, so that the side portion is slidably displaced with respect to the rear portion as described above, and the size of the main body unit 100 may be adjusted.

That is, as illustrated in FIG. 8(a) and FIG. 9(a), when the size of the main body unit 100 is not adjusted, a width Ws and a thickness Ts of the main body unit 100 can be worn by a user whose torso size is not large, and as illustrated in FIG. 8(b) and FIG. 9(b), when a wearer whose torso size is relatively large wears it, the side portion 120 of the main body unit 100 is withdrawn from the rear portion 110 in a state of being elastically pulled by the elastic member without a separate size adjustment operation, so that a width Wb and a thickness Tb of the main body unit 100 may be adjusted to fit the torso size.

That is, in a case of some conventional wearable robots, there were cases of providing a function of adjusting a width and a thickness of a structure mounted on a pelvis, but a structure for respectively adjusting the width and the thickness of the structure was common. Also, when a left-right adjustment structure is separately provided, a deviation of the adjusted size occurred in some cases, so there was also a problem that a size adjustment work was not completed at once.

However, the present invention includes the bent portion 150 in a form of slantingly connecting the rear portion 110 and the side portion 120 at the boundary of the rear portion 110 and the side portion 120 of the main body unit 100, and by configuring the side portion 120 to be withdrawable with respect to the rear portion 110 at the bent portion 150, the width and the thickness of an accommodation part of the main body unit 100 may be adjusted together according to the size of the torso, and a separate adjustment operation is also necessary, so that usability may be maximized.

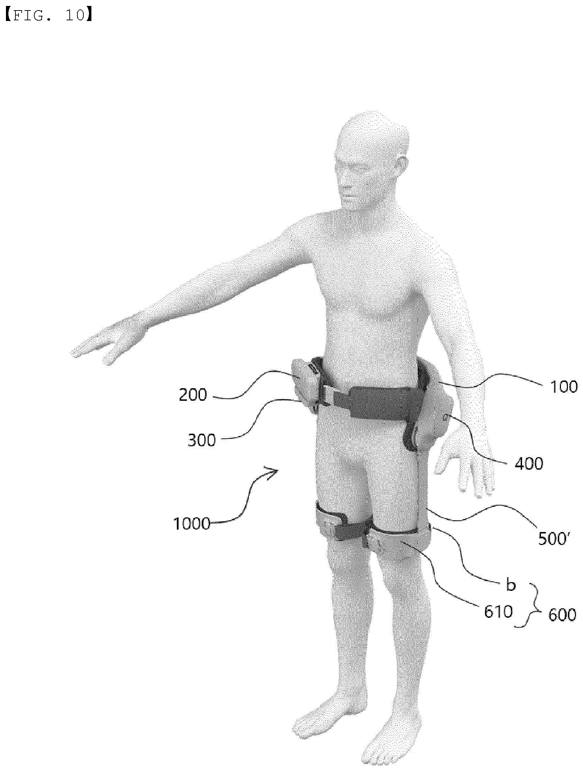

FIG. 10 illustrates a front perspective view of a wearer wearing the lower body assistance device according to the present invention according to another embodiment. Descriptions redundant with descriptions with reference to FIGS. 1 to 9 are omitted.

The lower body assistance device 1000 illustrated in FIG. 10 is the same in that a thigh frame 500' is connected to an output member and the like of the joint actuator 400 provided in the hip joint side area, but there is a difference in that a connection point of the thigh wearing unit is not the front area but the side area of the thigh.

That is, when a magnitude of required auxiliary force is not large, or a concern about distortion or leaning and the like upon providing the auxiliary force of the thigh frame is not large because a length of the thigh is short such as in a child, the thigh frame is configured in a form of a straight plate material of a simpler structure, so that a configuration of the lower body assistance device may be further simplified.

While the present specification has been described above with reference to the exemplary embodiments of the present invention, it may be understood by those skilled in the art that the present invention may be variously modified and changed without departing from the technical teachings and scope of the present invention disclosed in the claims. Therefore, it should be understood that any modified embodiment that essentially includes the constituent elements of the claims of the present invention is included in the technical scope of the present invention.

## Claims

1. A lower body assistance device, comprising:
a main body unit comprising a rear portion encompassing a rear waist area of a wearer and a pair of side portions extending to encompass hip joint areas of the wearer, respectively, wherein a front thereof is opened, and a metal frame and a housing encompassing the metal frame are provided therein;
at least one mount plate rotatably mounted at the front of the main body unit;
a thigh frame rotatably connected to both side portions of the main body unit and disposed along a thigh of the wearer;
a thigh wearing unit mounted on the thigh frame and provided to encompass the thigh of the wearer;
a joint actuator mounted on the side portion of the main body unit to rotate the thigh frame for assisting a hip joint movement of the wearer;
a controller mounted on the mount plate for controlling the joint actuator; and
a battery detachably mounted on the controller and supplying power to the joint actuator.

2. The lower body assistance device of claim 1, wherein an extension portion for hinge-coupling the mount plate is provided at a front end of the housing of the main body unit.

3. The lower body assistance device of claim 2, wherein a long hole for mounting a belt is formed in the mount plate.

4. The lower body assistance device of claim 1, wherein the controller is configured in an 'L' shape in which a vertical portion and a horizontal portion are connected in cross-section, and the battery is detachably mounted on the horizontal portion.

5. The lower body assistance device of claim 4, wherein an input portion for inputting a control signal is provided on a front surface of the horizontal portion of the controller.

6. The lower body assistance device of claim 4, wherein a remaining amount index of the battery mounted on the horizontal portion is provided on an upper surface of the vertical portion of the controller.

7. The lower body assistance device of claim 1, wherein the thigh wearing unit is mounted to be slidable in an up-and-down direction within a predetermined range with respect to the thigh frame.

8. The lower body assistance device of claim 1, wherein the thigh frame is configured in a shape connecting the side portion of the main body unit of the wearer and a front area or a side area of a thigh of the wearer.

9. The lower body assistance device of claim 1, wherein an upper end of the thigh frame is connected to and driven by an output member fastened to the joint actuator and rotationally driven, and a lower end of the thigh frame is connected to the thigh wearing unit to transmit a driving force of the joint actuator to the thigh wearing unit, and
wherein the upper end of the thigh frame is hinge-coupled to the output member such that adduction and abduction are allowed.

10. The lower body assistance device of claim 1, wherein the main body unit comprises a bent portion slantingly connecting between the rear portion and the pair of side portions, and at the bent portion, the pair of side portions are slid with respect to the rear portion, so that a width and a depth of the main body unit is adjustable in size.

11. The lower body assistance device of claim 1, wherein the metal frame constituting the main body unit is provided with a rear frame disposed inside the rear portion and bent at the bent portion, and a side frame at least partially overlapped with the rear frame at the bent portion and bent in a hip joint side direction, and the joint actuator is mounted on the side frame.

12. The lower body assistance device of claim 11, wherein the rear frame is fastened to a rear housing, and the side frame is fastened to a side housing, so that the pair of side portions of the main body unit are withdrawn or inserted with respect to the rear portion.

13. The lower body assistance device of claim 12, wherein an elastic member for providing an elastic force in a direction of restoring a withdrawn state of the side portion is connected to the side frame of the side portion.

14. The lower body assistance device of claim 13, wherein the elastic member is a coil spring connecting the side frames of both side portions.

15. The lower body assistance device of claim 1, wherein the joint actuator is configured to comprise a driving part comprising a driving motor, a reduction part connected to an output shaft of the driving motor of the driving part and to which an output member connected to the thigh frame is fastened, and a circuit part configured to comprise a plurality of stacked PCBs comprising a motor driver for controlling the driving motor and at least one sensor.

16. The lower body assistance device of claim 15, wherein the circuit part is provided at one side of the driving part, and the reduction part is configured by a plurality of gears connected in a single layer and is provided at a lower part of the driving part.
